(19) Europäisches Patentamt / European Patent Office / Office européen des brevets

(11) **EP 2 910 912 A1**

(12) **EUROPEAN PATENT APPLICATION**

(43) Date of publication:
**26.08.2015 Bulletin 2015/35**

(51) Int Cl.:
***G01G 19/08*** (2006.01)

(21) Application number: **14397509.2**

(22) Date of filing: **22.02.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TAMTRON OY**
**33561 Tampere (FI)**

(72) Inventor: **Asikainen, Pentti**
**00330 Helsinki (FI)**

(74) Representative: **IPR Partners Ltd**
**Hietalahdenranta 13**
**00180 Helsinki (FI)**

(54) **Improved monitoring system**

(57)  This invention relates generally to a monitoring system of a material transfer vehicle. The present invention can be applied in weighing a load of the vehicle and in monitoring physical stability of the vehicle. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck. The object of the invention is met by a solution, wherein a material transfer vehicle has at least one sensor for weighing and at least one sensor for measuring acceleration and/or angle of the vehicle or part of the vehicle in order to compensate the weighing data. In the inventive system a same part can be used for weighing a load of the carrying means, for providing feedback to movement control of a structure, and/or for monitoring a risk of overturning.

FIG. 3

EP 2 910 912 A1

## Description

### FIELD OF THE INVENTION

This invention relates generally to a monitoring system. The present invention can be applied for monitoring physical stability of a material transfer vehicle or other structures, and it can also be used for providing feedback for movement controls of a vehicle, and for compensating weighing data. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck. Other possible structures may include e.g. a mast, a pillar, a bridge, a silo, a windmill, drilling equipment, a roof, scaffolds, etc.

### BACKGROUND OF THE INVENTION

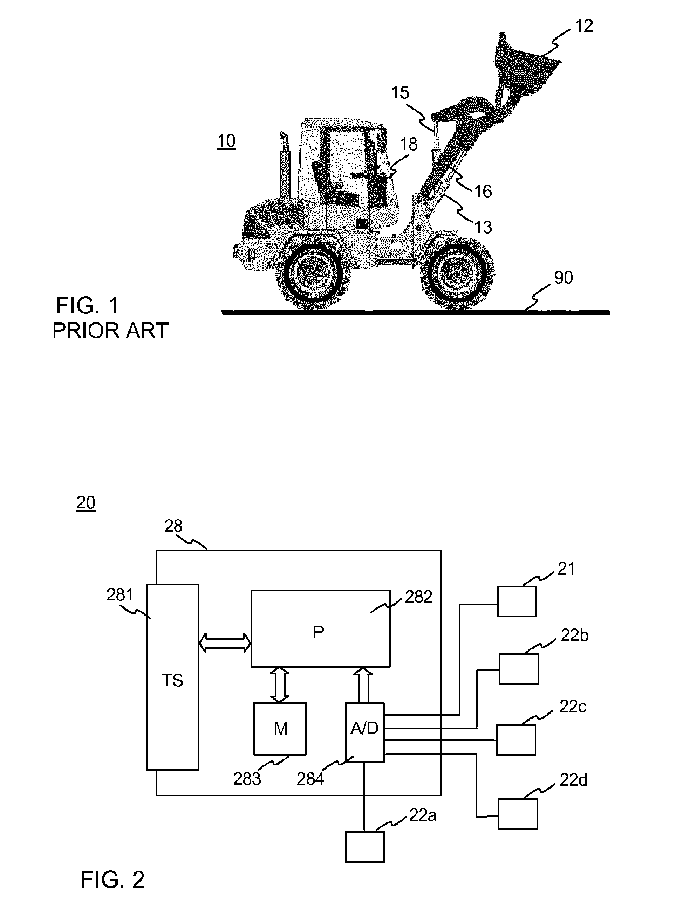

Material transfer vehicles often include a weighing arrangement for weighing material which is handled or carried. Figure 1 illustrates an exemplary material transfer vehicle according to the prior art, a wheel loader 10 located on ground 90. The wheel loader has a bucket 12 as a carrying means for the material to be transferred. The bucket is connected to the body parts / chassis of the wheel loader with an articulated beam 16. In order to lift/lower the bucket, hydraulic cylinders 13 are connected to the beam, and the cylinders are controlled with valves. Additionally, the wheel loader has hydraulic cylinders 15 for turning the bucket.

The purpose of the weighing device of the wheel loader is to measure the weight of the material which is currently placed in the bucket. The weighing arrangement may have electronic or hydraulic weighing sensors in the boom structure. For example, pressure sensors may be installed in the lifting cylinders, which pressure sensors measure the pressure of the hydraulic liquid in the cylinder. Alternatively, straingauge transducers can be used as weighing sensors, which can be installed in the joint between the bucket and the beam, for example.

However, the position, angle and movement of the chassis, boom or bucket of the material transfer vehicle has an effect on the output signal values of the weighing sensors, and the data of the weighing sensors should therefore be compensated with acceleration/position information. Such a compensation system is disclosed in patent document EP1083415B1. For the compensation purpose a material transfer vehicle may include position sensors, such as accelerometers, in the chassis of the material transfer vehicle. An excavator, for example, may also have sensors, such as accelerometers, for measuring the position of each boom for the compensation of the weighing.

The information received from the sensors is processed on the basis of measurement parameters, and a weighing result is achieved as a result of the processing. An electronics unit with user interface 18 of the weighing device is usually placed in the cabin of a vehicle.

Material transfer vehicles may also have systems for monitoring mechanical stability of the vehicle. This is necessary in order to avoid the vehicle from overturning. Such a risk of overturning may appear due to uneven base/ground 90, heavy load, and movement of the vehicle and/or movement of the load. For example, it is possible to monitor stability by measuring load on axles of the vehicle. If the load value on any axle or wheel is below a limit value, an alarm is given by the monitoring system.

There are some disadvantages related to the prior art solutions. If only weight is used for monitoring the risk of overturning such monitoring does not take into account effects of uneven ground or movement of the vehicle, for example. There are also separate monitoring systems available, which measure the acceleration of a vehicle. However, such a system is costly to produce and install because specific sensors, processing and user interface units are required for this purpose. It is also necessary to have separate sensors for weighing and for measuring positions of structure in order to provide feedback information for movement controls of vehicle parts, for example. Prior art systems also do not provide very accurate measurement results. Such systems are also not applicable for monitoring stability of structures which are static in their normal state.

### SUMMARY OF THE INVENTION

The objective of the present invention is to avoid or at least alleviate the aforesaid defects of prior art solutions and to achieve a solution by which the required measurements are provided for both accurate weighing of a load and stability monitoring of a structure, such as a material transfer vehicle or a static structure. The objective of the invention is met by a solution, wherein the stability monitoring system at least one gyroscope and one accelerometer for measuring angular position of the structure or parts of the structure. A gyroscope provides a signal on angular velocity:

$$\omega(t)=d\phi(t)/dt$$

The angular position is thus determined as a time integral on the angular velocity signal. This gives a reliable measurement result of the angular position, being insensitive to external interference. The integral value has a tendency to drift due to the algorithm and small offset of the gyroscope, but an accelerometer is used for correcting such drift. The correction is preferably made during a static state of the boom or based on other reliable accelerator information.

The load weight is determined on the basis of both first and second sensor units. When a sensor with gyroscope and accelerometers is used for measuring the angular position of a carrying means or a boom of the material transfer vehicle it is possible to achieve fast and more accurate response for angular movement, and therefore good measurement accuracy and stability can be achieved.

In one embodiment the accelerometer is adapted to correct drift of the gyroscope. In another embodiment the monitoring system has at least one common part used for both weighing the load and for measuring the mechanical stability. In the inventive system e.g. a same weighing sensor may be used for both weighing a load of a carrying means and for monitoring a risk of overturning, and e.g. a same sensor for measuring acceleration/angle of the vehicle may be used for compensating the weighing signal to achieve a compensated weighing result, for providing feedback for movement controls of e.g. vehicle parts, and/or for monitoring the physical stability of the vehicle or other structure.

A monitoring system of a structure in accordance with the invention, comprising:

- at least one first sensor for measuring angular position of the structure;
- processing means for providing a measurement result of the information received from the first sensor,
- user interface for providing information on the measurement result,

is characterized in that the first sensor of the stability monitoring system comprises a gyroscope and an accelerometer for measuring said angular position, and the processing means are adapted to process the information from sensor(s) in order to provide weight data, to provide feedback data for controlling movement of a structure and/or to provide information on physical stability of a structure.

The inventive system can be used for monitoring stability of both moving material transfer vehicles and static structures.

The inventive system offers an advantage of reduction in production and installation costs while same unit(s), part(s), component(s), cabling, and/or software can be used for both the measurement of load weight and the stability monitoring. It is also possible to install the system in a smaller and ergonomically optimal space in the cabin of the vehicle.

The monitoring system may use the same sensor for measuring load weight in both weight measurement and stability measurement. The weight sensor may be a strain gauge transducer or a pressure sensor, for example.

The monitoring system may also use a same sensor for measuring acceleration and/or angle both for compensation of the weight measurement, for providing feedback for movement control and/or for vehicle stability measurement.

It is further possible to have both weighing information and stability information on the same display, for example. It may also be possible to control the both functions with same input means, such as a touch screen, push buttons or switches. It is easier to find ergonomically optimal location for one user interface in a cabin of a vehicle than for several separate user interfaces. A common user interface also reduces the product cost.

According to one embodiment the processing of the weighing measurement data and the stability measurement data is provided with same processing means such as a processor. The calculation of the weight compensation and risk of overturning can be done on the basis of weighing data, vehicle data and/or data on angles, positions, movement and/or acceleration of the vehicle and/or structures of the vehicle. The related parameters and formulas can be stored in a memory of the monitoring system.

According to a preferable embodiment the monitoring system is arranged to give an alarm for the user if the risk of overturning or the load weight exceeds a corresponding predetermined limit. It is also possible that the movement of the vehicle, boom or carrying means is restricted by the monitoring means in such a situation. It is further possible that the movements/controls are restricted in a user specific manner. In such case the user is identified by the monitoring system, and user specific parameters are stored and used in the monitoring system for determining allowed controlled speeds of the vehicle parts, especially when the risk of overturning is near to the maximum allowed value. It is also possible that the maximum allowed value for the risk of overturning is user specific. This way an experienced user is able to use the vehicle with less safety restriction than an inexperienced user.

In one embodiment the monitoring system is arranged to determine the movement/speed/position/angle restrictions of the vehicle and/or parts of the vehicle by learning. In such a learning mode, the monitoring system monitors the measurement signals and detects risk situations, for example, where a wheel of the vehicle is detached from ground. Based on safe and risk situations the monitoring system then determines restrictions for the movements/positions/angles/speed/ weight of the vehicle and vehicle parts such as booms and carrying means, as well as allowed tilt angle of ground.

It is also possible to use the monitoring system for keeping a cabin, booms or a carrying means in a determined position. For example, a cabin is preferably in a horizontal position. It is possible to use the gyroscope angle sensors for measuring the horizontal tilt angle of a platform of a passenger hoist, and to use this information for the control of the platform in order to keep the platform in a horizontal position. As another example, it is possible to use the gyroscope sensors of the monitoring system for measuring the horizontal tilt angle of the cabin in an excavator or a harvester and use this information for controlling the position of the cabin in such a way that the cabin is kept in a horizontal position. This way the driver of the vehicle is not disturbed by tilting of the vehicle caused by uneven ground.

It is further possible to use the gyroscope/accelerometer sensors of the monitoring system for controlling the position of booms and a bucket during lifting, for example. Such a feature can be advantageous in wheel loaders, excavators etc. During lifting it is advantageous to keep the bucket in a certain position in relation to horizontal plane in order to avoid the load from becoming poured out from the bucket. To achieve this it is necessary to turn the bucket in relation to the boom during the lifting in order to compensate the change of the boom angle. In prior art, this has been achieved with specific mechanical structures. However, the signal from the gyroscope/accelerator of the bucket and possibly gyroscope(s)/accelerators of the boom(s) can be used for detecting the position of the bucket in relation to the horizontal plane, and the position information can be further used for controlling the bucket position to keep the bucket in a fixed angle/position in relation to the horizontal plane.

It is possible to implement the controlling of a cabinet, a platform or a bucket to stay in a determined angle in respect to the horizontal plane without weighing. Therefore weighing sensor(s) of the monitoring system are not necessarily used for this functionality.

According to one embodiment the monitoring system is applied for controlling hydraulic cylinders which have more than one piston, e.g. so-called digital hydraulic cylinders. When such a hydraulic cylinder is actuated one or several pistons are used. The activated cylinder(s) is preferably selected on the basis of the weight of the load. This way it is possible to achieve good efficiency of the hydraulic system. Information on the load weight can be obtained with the present monitoring system for the usage of a digital hydraulic system. It is also possible that the monitoring system provides the selection of the actuated pistons on the basis of the weight of the load. In this case the monitoring system may output control signals for the hydraulic pistons.

According to one embodiment the monitoring system has a functionality to record monitored data. The recorded data may include measured load weights and measured stability information, including provided alarms. The data to be recorded may also be selectable. In the recording it is preferable to include time information of the recording moment into the recorded data. The recorded data may be used in analyzing accidents, for example.

Some further embodiments of the present invention are disclosed in the dependent claims.

As described above, it is possible to achieve substantial advantages with the present invention. In the inventive solution an accurate measurement of the risk of overturning is achieved. It is not required to install separate acceleration/angle sensors for weighing and stability monitoring purposes. It is also possible to install and use a single electronics unit in the cabinet of the vehicle.

All data processing and presentation can be made with a single processor unit and single user interface. It is thus possible to get information and apply controls concerning both the load weights and vehicle stability as well as possible other monitoring functions at the same user interface. While the single electronics unit may replace three separate units in the vehicle cabin, it is possible to achieve essential benefits in installation, equipment costs, usability/ergonomics and requirement of cabinet space for the equipment.

In this patent application, a "material transfer vehicle" refers to all kinds of vehicles having carrying means for carrying a load and means for transferring the load. The material transfer vehicle may be e.g. a wheel loader, a forklift, an excavator, a dumper, a forwarder, a harvester, a crane, a passenger hoist, a timber jack, or a truck such as a fire truck, a forklift truck, a pallet truck, a reach truck, or a garbage truck.

In this patent application term "common" is used in a meaning that a sensor, other component, part, unit or function serves for at least following two purposes; measuring the load weight of the carrying means of the material transfer vehicle, and monitoring the physical stability / risk of overturning of the material transfer vehicle.

In this patent application term "horizontal plane" means a plane which is perpendicular to the force of gravitation of the earth.

BRIEF DESCRIPTION OF THE DRAWINGS

Next the invention will be described in more detail with reference to the following drawings:

Fig. 1    illustrates a wheel loader with a prior art weighing arrangement;

Fig. 2    illustrates a block diagram of an exemplary arrangement according to one embodiment of the invention;

Fig. 3    illustrates an excavator including an exemplary monitoring system according to the invention.

DETAILED DESCRIPTION OF EMBODIMENTS

Figure 1 was described in the prior art section above.

Figure 2 illustrates a block diagram for a monitoring system 20 according to an embodiment of the invention. The system has a sensor 21 of a first type for weighing a load on carrying means. The sensor may be a strain gauge transducer in an articulating joint of the vehicle or a pressure transducer in a hydraulic cylinder, for example, whose output signal is proportional to the load weight. The signal from the sensor is led to an electronics unit 28 with wireless data transfer or a cable, and the signal is further amplified and converted into digital form in an analog-to-digital (A/D) converter 284. The digital signal is read by a processor 282, which calculates a weight value of the load.

The monitoring system of Figure 2 also has four sensors of a second type, preferably including a gyroscope and accelerometers for measuring angular position. But they may alternatively be other conventional sensors measuring angle, acceleration or relative position. Sensor 22a of Figure 2 includes an inclination sensor, such as an accelerometer for measuring the inclination of a cabin or other structure. The angle may be measured in relation to horizontal plane. Such an inclinometer can be e.g. of type SCA100-T produced by Murata Electronics Oy.

The sensor 22a includes a gyroscope and accelerometer, and it may include a magnetic sensor. Sensor 22b may measure the angle of a first boom of the material transfer vehicle, for example. The angle may be measured in relation to the horizontal plane. The sensor for measuring angle may be based on a gyroscope and an accelerometer. If the boom structure of the material transfer vehicle includes two booms articulated with each other, the sensor 22c may measure the position of the second boom. There is preferably also a sensor 22d for measuring the position of the carrying means. These sensors are preferably based on gyroscopes/accelerometers, but they may alternatively be mechanical or optical sensors measuring relative position between two booms or between a boom and a carrying means. A suitable sensor with 1-dimensional gyroscope and a 3-dimensional accelerometer is e.g. type SCC1300-D02 produced by Murata Electronics Oy.

The signals from gyroscopes and/or acceleration and/or angle sensors are led wirelessly or via cables to the electronics unit 28, in which the signals are amplified and converted into digital form by the A/D converter 284. The digital signals are read by the processor 282. The signals from the second type sensors are used for compensating the signal from the first sensor in order to achieve a more accurate weighing result of the load. The compensation may thus take into account possible angle and/or acceleration of the material transfer vehicle as a whole, as well as possible acceleration and/or angle of a boom and a carrying means of the material transfer vehicle. When measuring the angle between the cabin and the horizontal plane, and relative angles between the cabin, boom parts and carrying means, it is possible to determine the angle of the carrying means in relation to the horizontal plane and in relation to the first, weighing sensor. This information is then used for the compensation of the weighing measurement in order to achieve a compensated weighing result.

The compensated weighing result is stored to a memory 283 of the electronics unit, and shown at the display 281 of the electronics unit. The display may be a touch screen, for example, with also a possibility to input information and selections by the user. The memory and the touch screen are controlled by the processor 282. The weighing of the load may be performed during the load is lifted. The user may indicate that the measurement result is saved by pressing a corresponding push button, for example, whereby the arrangement is adapted to register the detected weight of the load. It is also possible that the registering of the measurement is activated when the position of the carrying means is within certain limits.

It is also possible that in addition to informing the user of the weighing result the system also gives an alarm to the user if the load weight exceeds a predetermined safety threshold value. The predetermined threshold value may be stored to them memory 283. The alarm may be audible or visible, for example. It is also possible that exceeding the safety threshold value of the load weight causes the monitoring system to restrict further movement of the carrying means, a boom or the whole vehicle. It is also possible that exceeding the safety threshold value of the load weight causes the monitoring system to force the carrying means to be moved to ground level, for example. Such a restriction or forcing of movement is meant to reduce the risk of damages due to overload, for example. As described above, it is also possible that the safety restrictions or forcing functions are user specific. This way the restrictions for an experienced user may be lower than for an inexperienced user. Further, it is possible that the restrictions are determined by the monitoring system on the basis of learning from the measured/detected incidents of the vehicle. Such learning may also be user specific.

As described above, it is also possible to use the monitoring system for controlling pistons of a digital hydraulic system. The activated piston(s) of a cylinder is preferably selected on the basis of the weight of the load. This way it is possible to achieve good efficiency of the hydraulic system. It is possible that the monitoring system provides weight value of the load for the selection of the actuated pistons. It is also possible that the monitoring system may output control signals for controlling the hydraulic pistons.

The signals from the acceleration and/or angle sensors 22a, 22b, 22c, 22d are also used for monitoring the physical stability of the material transfer vehicle. The angle of the material transfer vehicle is determined in relation to the horizontal plane in two directions. One direction is preferably the back-front direction of the material transfer vehicle, and the other direction is preferably the left-right direction of the material transfer vehicle. Thus the angle between the first direction and the horizontal plane is determined as well as the angle between the second direction and the horizontal plane. Based on the measured acceleration and angle values the processor calculates a risk level for the overturning of the vehicle. It is possible that the input from the weight sensor 21 is also used for determining the risk value of overturning.

It should be noted that even if same angle/acceleration sensors may be used for both monitoring stability and compensation of weight calculation, it is also possible that not all such sensors are used for weight compensation. For example, it may be sufficient to use sensor(s) located close to the carrying means for the compensation, especially if weighing sensor is also located close to the carrying means. It is also possible that a weighing sensor and an angle/acceleration sensor are located in a same sensor unit. For example, a passenger hoist may include a sensor unit installed between a boom and a platform, where the sensor unit may include a weighing sensor for weighing the load, and a gyroscope and/or accelerometer for measuring angle/acceleration for compensation in weighing as well as for monitoring stability of the vehicle and possibly for controlling the platform to be in a horizontal position.

A predetermined threshold value for the risk of overturning is preferably stored in the memory 283. The risk level calculated by the processor is compared to the threshold value, and if the measured/calculated risk level exceeds the threshold value the monitoring system is arranged to give an alarm to the user. The alarm may be audible and/or visible. It is also possible that exceeding the safety threshold value of the risk for overturning causes the monitoring system to restrict further movement of the vehicle and/or parts (e.g. carrying means, boom) of the vehicle. It is further possible that exceeding the safety threshold value of the risk for overturning causes the monitoring system to force a movement of the vehicle, carrying means or a boom, such as forcing the carrying means to be moved to ground level. The risk of overturning can thus be reduced or prevented to increase by such a restriction or forcing of movement. Measurement values and alarms may also be stored in the memory 283 for possible future requirements. As described above, it is also possible that the safety restrictions or forcing functions are user specific. This way the restrictions for an experienced user may be lower than for an inexperienced user. Further, it is possible that the restrictions are determined by the monitoring system on the basis of learning from the measured/detected incidents of the vehicle. Such learning may also be user specific.

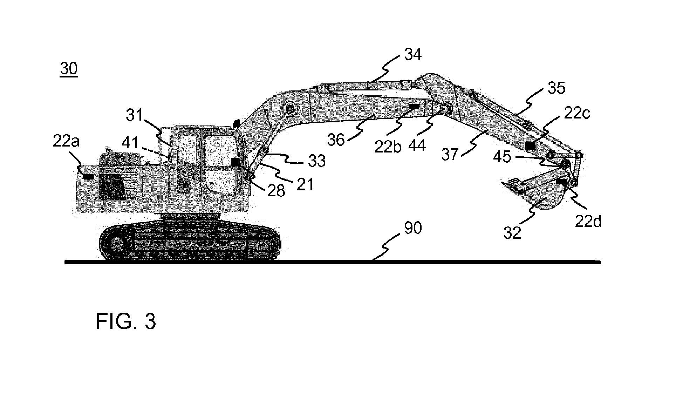

Figure 3 illustrates an excavator 30 with an exemplary monitoring system according to the invention. The monitoring system has one sensor 22a at the cabin 31 of the excavator. This acceleration sensor gives information on the movement of the whole excavator as well as the rotating movement of the cabin. The sensor 22a may include an inclination sensor, such as an acceleration sensor. The excavator has two articulated booms 36 and 37, which are moved by hydraulic cylinders 33 and 34 respectively. A bucket 32 is coupled to the boom 37, and moved with a hydraulic cylinder 35. The monitoring system has another gyroscope sensor 22b at the boom 36 for monitoring the movement of the boom. There is also a gyroscope and accelerator sensor 22c at the second boom 37 and a further gyroscope and accelerator sensor 22d at the bucket 32. These sensors are used for compensation in measuring the load weight of the bucket 32. The sensors are also used for stability measurement.

The monitoring system also includes at least one weighing sensor (not shown). The weighing sensors may preferably be pressure sensors located in one of the hydraulic cylinders 33, 34 and/or 35, most preferably in the hydraulic cylinder 33 measuring front and back pressure. A weighing sensor may also be a strain gauge transducer which is preferably located at a joint 41 between the main boom 36 and the chassis 31 of the vehicle. Alternatively or additionally there may be a strain gauge sensor at the joint 44 between the main boom 36 and the second boom 37, or at the joint 45 between the second boom 37 and the bucket 32. The weighing sensors are used for providing initial information on the load weight. Weighing sensors may also be used in the stability measurement of the vehicle.

The electronics unit 28, including the user interface of the monitoring system, is located inside the cabin 31 at an ergonomically suitable location.

The scope of the patent will be defined by the appended claims. Skilled persons will appreciate the fact that various changes and modifications may be made to the explicitly disclosed embodiments and features thereof without diverging from the scope as set forth in the claims.

For example, the carrying means is not necessarily a bucket of an excavator, but it may also be a platform or a tank of a truck or a hook of a crane, for example. It is also possible that the parts of the monitoring system are arranged into units in a different way. For example, it is possible that each sensor is equipped with an integrated amplifier and A/D-converter in order to reduce effects of electric noise coupled to cables. It is also possible to use wireless data transfer between the sensors and the electronics unit, for example.

The described examples have concerned stability monitoring systems of material transfer vehicles, but it should be noted that the invention can also be used for monitoring stability of structures which are normally in a static state.

## Claims

1. A monitoring system (20) of a structure, comprising:

   - at least one first sensor (22a, 22b, 22c, 22d) for measuring angular position of the structure;
   - processing means (282) for providing a measurement result of the information received from the first sensor,
   - user interface (281) for providing information on the measurement result,
   **characterized in that** the first sensor of the stability monitoring system comprises a gyroscope and an accelerometer for measuring said angular position, and the processing means are adapted to process the information from sensor(s) in order to provide weight data, to provide feedback data for controlling movement of a structure and/or to provide information on physical stability of a structure.

2. The monitoring system (20) according to claim 1, wherein the structure is a material transfer vehicle, which has means (32) for carrying material, and the stability monitoring system comprises:

- at least one second sensor (21) for weighing the material being carried by the carrying means;
- the first sensor (22a, 22b, 22c, 22d) measuring an angle of a base, boom and/or carrying means of the material transfer vehicle in respect to a horizontal plane or other part of the material transfer vehicle;
- the processing means (282) providing a weight measurement result of the material on the basis of the information received from the first sensor and the second sensor,
- the user interface (281) providing information on the weight measurement result, wherein the stability monitoring system comprises multipurpose means (21, 22a, 22b, 22c, 22d, 281, 282, 284), which are arranged to handle at least two of the functions including weighing material, providing feedback data for the control of vehicle structure movements, and the monitoring of physical stability of the vehicle.

3. Monitoring system according to claim 2, **characterized in that** said common means comprises the first sensor, whereby the weighing measurement, providing feedback for movement control and/or the stability measurement are based on the output of the first sensor (21).

4. Monitoring system according to claim 2 or 3, **characterized in that** said common means comprises the second sensor, whereby the weighing measurement, providing feedback for movement control and/or the stability measurement are based on the output of the second sensor (22a, 22b, 22c, 22d).

5. Monitoring system according to any of claim 2-4, **characterized in that** said multipurpose means comprises the user interface, whereby information on results of the weighing measurement and results of the stability measurement is provided by the user interface (281).

6. Monitoring system according to any claim of claims 2-5, **characterized in that** said multipurpose means comprises the processing means (282), whereby the processing means are arranged to process sensor output signals for providing the weighing measurement result, feedback for movement control, and/or the stability measurement result.

7. Monitoring system according to any previous claim, **characterized in that** the stability measurement is arranged to provide a result which corresponds to the risk of overturning of the vehicle, and the monitoring system is arranged to provide an alarm when a predetermined risk level of overturning is exceeded.

8. Monitoring system according to claims 2 and 7, **characterized in that** monitoring system is arranged to restrict or force the movement of the vehicle, the carrying means of the vehicle and/or a possible boom of the vehicle when a predetermined risk level of overturning is exceeded.

9. Monitoring system according to claim 7 or 8, **characterized in that** the predetermined risk level and/or a related restriction of movement is user specific.

10. Monitoring system according to any of claims 7-8, **characterized in that** the monitoring system is arranged to monitor the risk of overturning on the basis of the received sensor data, and to define a predetermined risk level and/or restriction of movement by learning on the basis of the monitored data.

11. Monitoring system according to any previous claim, **characterized in that** the monitoring system has storage (283) for storing measurement data, alarm information and/or imaging data for later access.

12. Stability monitoring system according to any previous claim, **characterized in that** the monitoring system provides information on the load weight for controlling pistons of a hydraulic system in a material transfer vehicle.

13. Stability monitoring system according to any previous claim, **characterized in that** the processing means are adapted to determine the angular position of the second sensor unit on the basis of the accelerator output or the gyroscope output depending on the amount of movement of the second sensor unit at that moment of time.

FIG. 1
PRIOR ART

FIG. 2

FIG. 3

Europäisches
Patentamt

European
Patent Office

Office européen
des brevets

# EUROPEAN SEARCH REPORT

**Application Number**

EP 14 39 7509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 511 677 A1 (TAMTRON OY [FI]) 17 October 2012 (2012-10-17) * abstract; claims 1-3,6-9; figure 3 * * paragraphs [0001], [0010] - [0011], [0017] - [0020] * ----- | 1-13 | INV. G01G19/08 |

**TECHNICAL FIELDS
SEARCHED       (IPC)**

G01G

The present search report has been drawn up for all claims

| Place of search | Date of completion of the search | Examiner |
|---|---|---|
| The Hague | 12 June 2014 | Pugno, Roberto |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 ...................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 39 7509

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2014

| Patent document cited in search report | Publication date | Patent family member(s) | | Publication date |
|---|---|---|---|---|
| EP 2511677 A1 | 17-10-2012 | CN<br>EP | 102735319 A<br>2511677 A1 | 17-10-2012<br>17-10-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1083415 B1